# FASCICULE DE BREVET EUROPEEN

(11) **EP 2 818 298 B1**
(45) Date de publication et mention de la délivrance du brevet: **02.01.2019**
(21) Numéro de dépôt: 14171997.1
(22) Date de dépôt: 11.06.2014
(51) Int. Cl.: B29C 45/14

(54) **Unité de surmoulage d'un composant bimatière et composant bimatière fabriqué à partir de l'unité de surmoulage**
Abformeinheit einer Bi-Material-Komponente, und Bi-Material-Komponente, die mit dieser Abformeinheit hergestellt wird
Unit for overmoulding a bi-material component and bi-material component manufactured using the overmoulding unit

(30) Priorité: 24.06.2013 FR 1356025
(43) Date de publication de la demande: 31.12.2014
(73) Titulaire: F.M.B Industrie, 80220 Bouttencourt (FR)
(72) Inventeur: Lecul, Jean Pierre, 80220 BOUTTENCOURT (FR); Macqueron, Bertrand, 80220 BOUTTENCOURT (FR); Demachy, Evrard, 80220 BOUTTENCOURT (FR)
(74) Mandataire: Louiset, Raphaël

(56) Documents cités:
- FR-A- 1 297 831
- FR-A- 1 300 212
- GB-A- 2 212 435
- JP-A- H 058 285
- JP-A- H 058 286

## Description

L'invention a trait au domaine de la fabrication de composants bimatière comprenant une partie en matière plastique et une partie en matière non plastique.

Plus précisément, l'invention concerne un procédé de surmoulage d'une pièce plastique sur une pièce non plastique.

Les composants bimatière sont connus et utilisés dans divers domaines, typiquement l'industrie automobile, l'industrie optique ou encore l'industrie de l'emballage.

Une technique répandue pour la fabrication des composants bimatière est de fabriquer les éléments séparément et de les assembler par différents procédés tels que le sertissage, le montage serré, le vissage ou encore le collage. D'un point de vue industriel, ces techniques ne donnent pas complète satisfaction car, outre les deux opérations séparées de fabrication de chacun de éléments, doit être prévue une opération supplémentaire d'assemblage des éléments. Cette opération nécessite un surcroît de main d'oeuvre ou une machine dédiée, au détriment de la simplicité, des cadences et des coûts de fabrication.

En outre, les composants bimatière peuvent nécessiter une grande rigueur esthétique, ce qui est notamment le cas pour les composants au moins partiellement transparents. Or l'assemblage de pièces différentes par les techniques précitées n'est généralement pas invisible. S'agissant du vissage, il est fréquent que l'on distingue sur chaque pièce le filetage et/ou le taraudage. S'agissant du collage, des bulles d'air présentes dans la colle (ou un surplus de colle à l'interface des deux pièces) peuvent nuire à l'esthétique générale du composant.

S'agissant du sertissage, il est courant d'utiliser une troisième pièce généralement opaque dans le but de masquer la jonction entre les différentes pièces, ce qui atténue la transparence du composant.

La technique du surmoulage, qui s'est développée à partir des années 1950 puis a connu des avancées substantielles dans les années 1990 dont témoigne le nombre de brevets déposés, permet de répondre aux inconvénients précités mais impose cependant des contraintes de conception inédites concernant à la fois les pièces et les moules, compte tenu de la nécessité, d'une part, d'assurer un maintien ferme et précis de l'élément à surmouler dans la cavité de surmoulage et, d'autre part, de démouler facilement le composant bimatière obtenu.

Le document FR 1 297 831 (AIR LIQUIDE) présente un moule pour le surmoulage d'une pièce en matière plastique sur un culot de siphon en pyrex®. Le moule comprend une partie inférieure portant un joint interne élastique apte à venir en contact avec une face externe du culot, et une partie supérieure ayant une partie centrale portant une garniture élastique apte à venir en contact avec une face intérieure du culot. Ces pièces élastiques délimitent, respectivement axialement et radialement, une cavité de surmoulage dans laquelle la matière plastique est injectée. La matière plastique, une fois injectée, elle forme une douille filetée qui s'étend axialement dans le prolongement d'une rondelle solidaire d'une face d'extrémité du culot.

Cette architecture convient au regard de l'utilisation finale du composant bimatière, destiné à être vissé sur un raccord en assurant une étanchéité axiale par écrasement de la rondelle surmoulée. Elle se révèle cependant inadaptée pour des composants destinés à d'autres utilisations, et en particulier pour des bouchons destinés à assurer une étanchéité radiale par application sur un col de récipient. En effet, ce type d'application suppose une tolérance de fabrication stricte sur le diamètre interne de la pièce surmoulée, ce qui n'est pas le cas dans le document précité, où la face interne de la rondelle est injectée contre la garniture déformable portée par la partie centrale du moule.

La présente invention a pour objectif principal de remédier aux inconvénients de l'art antérieur en permettant de réaliser un composant bimatière obtenu par surmoulage dans lequel la surface interne de la pièce surmoulée présente des tolérances de fabrication strictes sur son diamètre interne.

Un deuxième objectif est de permettre de réaliser un surmoulage en matière plastique sur une pièce support adaptable aux tolérances dimensionnelles des pièces support.

A cet effet, il est proposé en premier lieu une unité de surmoulage d'un composant bimatière comprenant une pièce support pourvue d'une jupe cylindrique et une pièce de finition en matière plastique surmoulée sur la pièce support, l'unité de surmoulage comprenant :
- une broche centrale comprenant une paroi latérale et une surface supérieure sur laquelle repose un joint interne apte à venir en contact d'une face interne de la jupe de la pièce support, la paroi latérale et la surface supérieure étant jointes à une extrémité supérieure de la broche ;
- un moule, définissant une paroi externe entourant la broche ;
- un joint externe en saillie de la paroi externe du moule apte à venir en contact sur une face externe de la jupe de la pièce support,
- -la paroi latérale de la broche définissant une paroi interne d'une cavité de surmoulage dans laquelle la matière plastique est injectée ;
- le joint interne s'étendant axialement depuis la surface supérieure dans une direction opposée de la broche ;
- le joint interne étant configuré pour être comprimé axialement afin de venir au contact de la face interne de la jupe de la pièce support.

La cavité de moulage étant délimitée par des surfaces dures permet de réaliser un surmoulage ayant des dimensions fonctionnelles.

Diverses caractéristiques supplémentaires peuvent être prévues, seules ou en combinaison :
- le joint interne est comprimé pour venir au contact de la face interne de la jupe par une coupelle et un arbre solidaire de la coupelle, l'arbre traversant la broche longitudinalement, la coupelle ayant une bague propre à comprimer axialement le joint interne sous l'effet d'une force appliquée sur l'arbre ;
- le moule comprend en outre un dessus de moule apte à maintenir des chariots composant le moule et la pièce support en position lors du surmoulage de la pièce de finition sur la pièce support ;
- le joint externe se compose de deux demi-joints portés chacun par un chariot du moule et maintenus dans un lamage réalisé sur les chariots au moyen d'une plaque de maintien.

Il est proposé en second lieu un procédé de fabrication d'un composant bimatière comprenant une pièce support pourvue d'une jupe cylindrique et une pièce de finition en matière plastique surmoulée sur la pièce support, au moyen d'une unité de moulage telle que décrite précédemment, le procédé comprenant les étapes consistant à :
- insérer une pièce support dans l'unité de surmoulage ;
- fermer le moule ;
- maintenir la pièce support en position ;
- injecter une matière plastique constitutive de la pièce de finition dans une cavité de surmoulage ;
- ouvrir le moule ;
- éjecter le composant bimatière
le procédé comprenant en outre une étape de délimitation de la cavité de surmoulage dans laquelle un joint interne est compressé axialement pour venir au contact de la jupe de la pièce support.

Dans une réalisation, la pression d'injection de la matière plastique est comprise entre 10 et 30 bars.

D'autres caractéristiques et avantages de l'invention apparaîtront plus clairement et de manière concrète à la lecture de la description ci-après de modes de réalisation, laquelle est faite en référence aux dessins annexés dans lesquels :
- La figure 1 est une vue en perspective de dessous d'un composant bimatière ;
- La figure 2 est une vue en perspective de dessous d'une pièce support ;
- La figure 3 est une section d'un bouchon bimatière monté sur le col d'un bouchon ;
- La figure 4 est une vue de dessus d'une unité de surmoulage d'un composant bimatière ;
- La figure 5 est une section transversale d'une unité de surmoulage dans laquelle est insérée une pièce support, avant délimitation de la cavité de surmoulage ;
- La figure 6 est une vue similaire à celle de la figure 5 dans laquelle la cavité de surmoulage est délimitée.

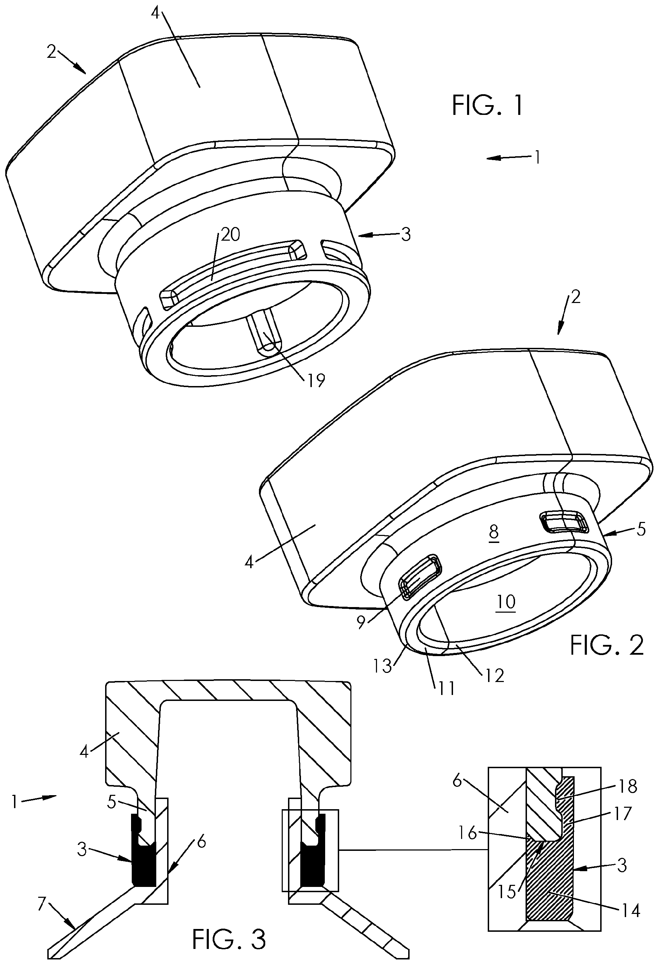

Sur la figure 1 est représenté un composant **1** bimatière composé d'une pièce **2** support - représentée isolément sur la figure 2 - et d'une pièce **3** de finition surmoulée sur la pièce **2** support. La pièce **2** support comporte un corps **4** et une jupe **5** cylindrique qui s'étend en saillie axiale à partir du corps **4.**

Selon un mode de réalisation particulier représenté sur la figure 3, le composant **1** bimatière est en l'espèce un bouchon destiné à être rapporté sur le col **6** d'un récipient **7** pour en assurer l'étanchéité. Ce récipient **7** est par exemple un flacon de parfum (pouvant être réalisé en cristal, en verre ou dans une matière plastique) dont les essences volatiles doivent être préservées de l'évaporation par l'étanchéité procurée par la pièce **3** de finition.

En outre, comme il sera expliqué ci-après, le composant **1** bimatière est un bouchon ayant une tenue mécanique accrue sur le col **6** du récipient **7.**

La pièce **2** support est par exemple réalisée en cristal ou en verre, notamment par moulage. La jupe **5** présente, sur une face **8** externe, des réserves **9** en creux destinées, comme il sera expliqué ci-après, à favoriser l'accroche de la pièce **3** de finition surmoulée, facilitant ainsi la tenue mécanique entre la pièce **2** support et la pièce **3** de finition surmoulée.

La jupe **5**, de forme cylindrique, présente une face **10** interne en vis-à-vis de la face **8** externe, la face **10** interne et la face externe étant reliées, à l'opposé du corps **4**, par une face **11** d'extrémité ayant, sur un bord intérieur, un chanfrein **12** et, sur un bord extérieur, un congé **13** de raccordement à la face **8** externe, de sorte à favoriser encore l'accroche de la pièce **3** de finition surmoulée.

Selon un mode de réalisation particulier, les réserves **9** en creux sur la face **8** externe de la jupe **5** sont au nombre de quatre, réparties uniformément à 90°.

La pièce **3** de finition présente une forme sensiblement annulaire comprenant, lorsque vue en coupe transversale sur la figure 3, une âme **14** qui s'étend dans le prolongement de la jupe **5.** L'âme **14** présente une face **15** supérieure qui coopère avec la face **11** d'extrémité de la jupe. A partir de l'âme **14** s'étendent en saillie axiale, respectivement intérieurement une lèvre **16** qui comble le chanfrein **12** et, extérieurement, un bras **17**. Le bras **17** porte quatre pions **18** en saillie comblant chacun une réserve **9** en creux de la jupe **5**.

Comme cela est visible sur la figure 1, l'âme **14** est munie de saillies axiales uniformément réparties angulairement, formées par des contre dépouilles **19** destinées à assurer une tenue supplémentaire du composant **1** sur le récipient **7**.

En outre, comme cela est également visible sur la figure 2, la pièce **3** de finition présente des rainures **20** périphériques creusées sur un bord externe de l'âme **14**. Ces rainures **20** périphériques, en l'espèce au nombre de quatre, uniformément réparties sur la périphérie de l'âme **14**, ont pour fonction d'alléger le composant **1** bimatière. Il peut en effet être nécessaire que le composant **1** bimatière soit léger par exemple lorsqu'il est destiné à recouvrir un pulvérisateur muni d'un ressort, pour ne pas contraindre le ressort.

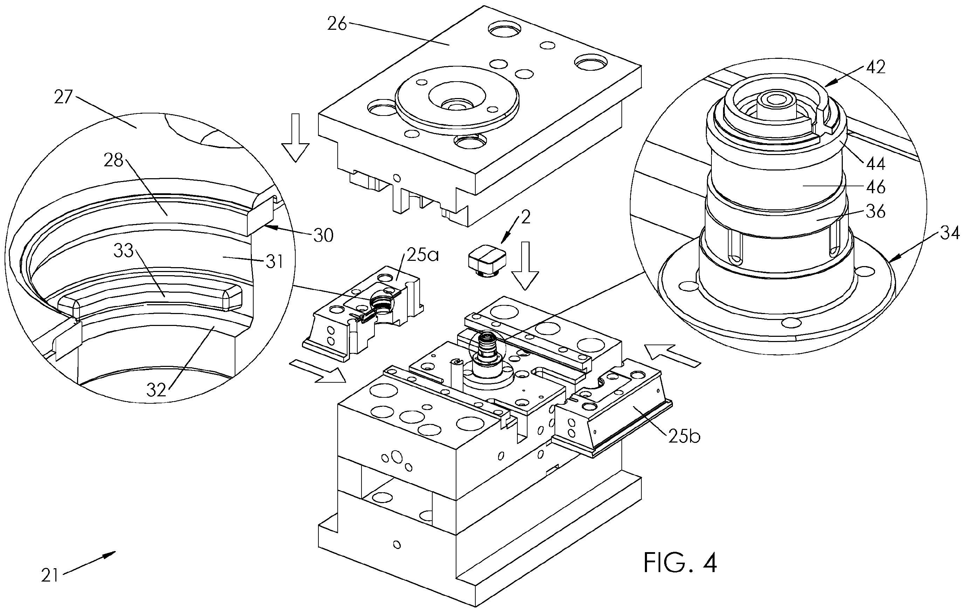

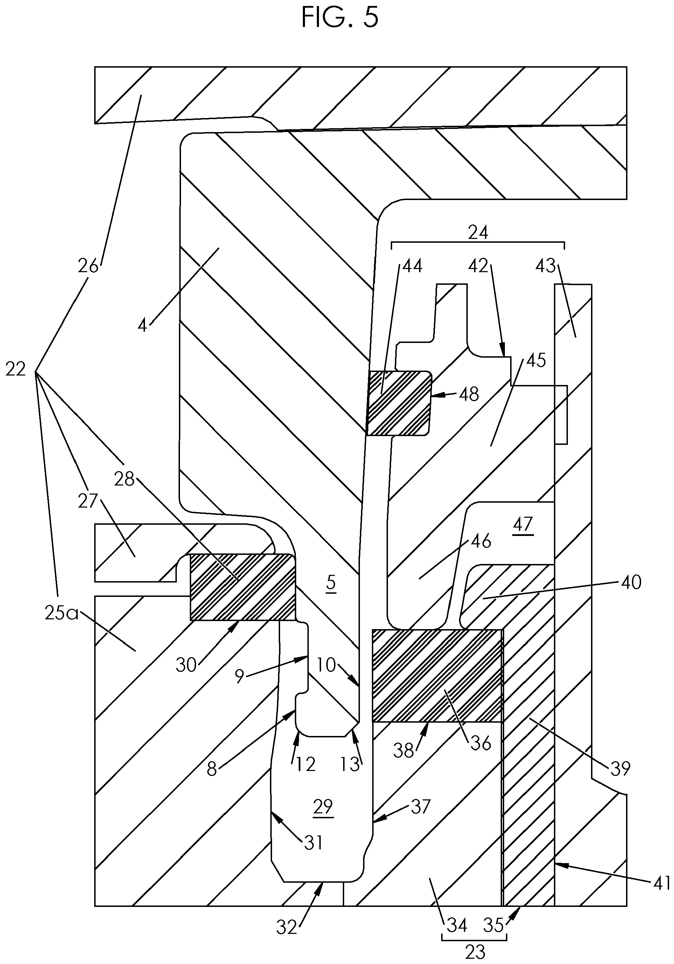

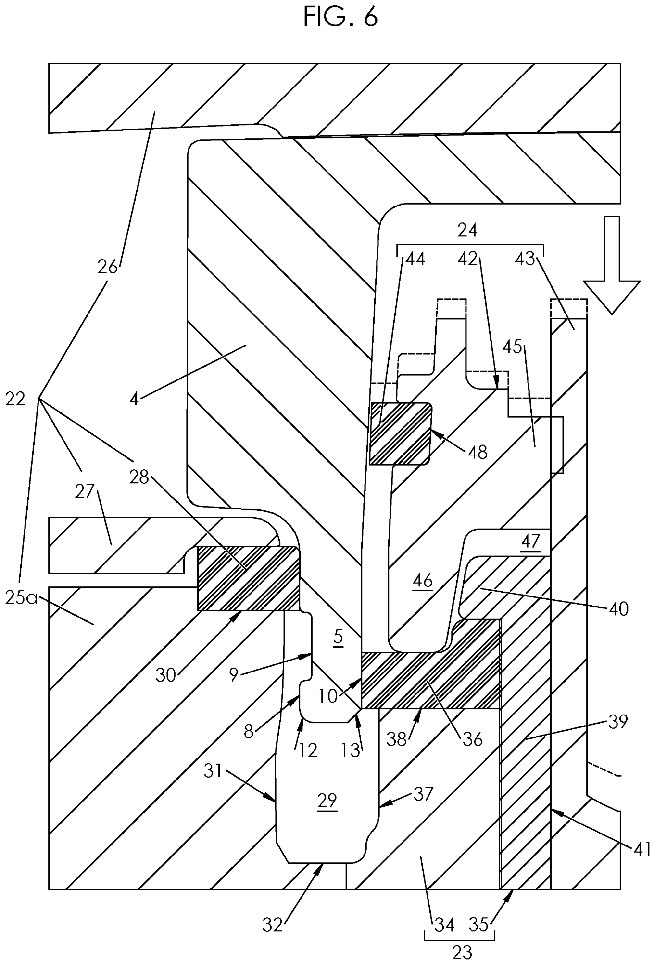

Selon un mode de réalisation avantageux, la pièce 3 de finition est réalisée en matière plastique et est directement surmoulée sur la pièce **2** support dans une unité **21** de surmoulage illustrée de manière éclatée sur la figure 4 et en coupe partielle de détail sur les figures 5 et 6.

L'unité **21** de surmoulage, représentée sur les figures 4 à 6, comprend un moule **22**, une partie **23** centrale montée dans le moule **22** et un équipage **24** mobile monté dans la partie **23** centrale.

Le moule **22** est équipé de deux chariots **25a**, **25b**, d'un dessus **26** de moule, de plaques **27** de maintien et d'un joint **28** externe destiné à former une première limite supérieure d'une cavité **29** de surmoulage de la pièce 3 de finition sur la pièce **2** support.

Lorsque les deux chariots **25a**, **25b** sont jointifs, ils définissent une limite externe et une limite inférieure de la cavité **29** de surmoulage.

Le moule **22** présente, sur une partie supérieure, un lamage **30** réparti sur les deux chariots **25a**, **25b**. Dans ce lamage **30** est inséré le joint **28** externe qui, lorsque les chariots **25a**, **25b** sont jointifs, vient au contact de la face **8** externe de la jupe **5** de la pièce **2** support. Ce joint **28** externe est formé par jonction de deux demi-joints portés respectivement par les chariots **25a**, **25b**.

Le joint **28** externe est maintenu dans le lamage **30** au moyen des plaques **27** de maintien.

Chaque chariot **25a**, **25b** comprend une paroi **31** externe définissant la limite externe de la cavité **29** surmoulage de la pièce **3** de finition et un fond **32** définissant la limite inférieure de la cavité **29** de surmoulage, le fond **32** joignant la paroi **31** externe du chariot **25a**, **25b** par un chanfrein.

Comme on peut le voir sur un détail de la figure 4, chaque chariot **25**a, **25**b comprend, sur sa paroi **31** externe, au moins un relief **33** propre à définir les rainures périphériques de la pièce **3** de finition. Selon le mode de réalisation représenté sur les figures, les reliefs 33 sont au nombre de deux sur chaque chariot **25**a, **25b**.

Le dessus de moule permet de recouvrir et maintenir les deux chariots **25a**, **25b** lorsque ceux-ci sont jointifs, lors de la phase d'injection, à l'encontre de la pression d'injection de la matière plastique qui tend à écarter les chariots **25a**, **25b** l'un de l'autre.

En outre, le dessus **26** de moule permet également de maintenir la pièce **2** support en position lorsque la matière plastique est injectée, la pression d'injection ayant pour effet de repousser la pièce **2** support hors de l'unité **21** de surmoulage.

La partie **23** centrale de l'unité **21** de surmoulage comprend une broche **34** définissant une direction axiale, un doigt **35** de serrage et un joint **36** interne destiné à former, par écrasement, une limite supérieure de la cavité **29** de surmoulage.

La broche **34** comprend une paroi **37** latérale définissant une limite interne de la cavité surmoulage et une surface **38** supérieure sur laquelle repose le joint **36** interne.

La broche **34** comprend également, en son centre, un taraudage dans lequel est vissé le doigt **35** de serrage. Le doigt **35** de serrage comprend un fourreau **39** longitudinal pourvu sur une périphérie externe d'un filetage propre à coopérer avec le taraudage de la broche **34**, et une tête **40** s'étendant transversalement par rapport au fourreau 39 au dessus de la surface **38** supérieure de la broche **34**.

Le doigt **35** de serrage forme, lorsque vu en coupe, un T, la tête assurant le maintien en position du joint **36** interne, de forme annulaire. Le filetage du doigt **35** de serrage permet de le régler en hauteur de la tête **40** du doigt **35** de serrage par rapport à la surface **38** supérieure de la broche **34** et ainsi bloquer le joint **36** interne sans l'écraser.

En outre, le doigt **35** de serrage comprend, en partie centrale du fourreau, un alésage **41** longitudinal débouchant de part et d'autre du fourreau **39**, dans lequel est reçu l'équipage **24** mobile.

L'équipage **24** mobile comprend une coupelle **42**, un arbre **43** et un joint **44** support.

La coupelle **42** comprend un tronc **45** et une bague **46** destinée à venir écraser le joint **36** interne, la bague **46** étant solidaire du tronc **45** en partie inférieure de celui-ci. La bague **46** et le tronc **45** forment alors une chambre **47** dans laquelle est logée la tête **40** du doigt **35** de serrage.

Le tronc **45** de la coupelle **42** comporte, en outre, une gorge **48** annulaire propre à accueillir le joint **44** support. Le joint **44** support permet, comme il sera expliqué ci-après, de supporter la pièce **2** support au moins préalablement au surmoulage. Lorsque les chariots **25a**, **25b** se referment sur la pièce support, le maintien de la pièce **4** support se fait alors principalement au niveau du joint **28** externe, le joint support **44** pouvant alors être écarté de la pièce **4** support, comme cela est représenté sur la figure 6.

L'arbre **43** comprend une partie supérieure sur laquelle est fixée la coupelle **42** par vissage, collage, soudage, encliquetage ou tout autre moyen de fixation approprié.

L'arbre **43** est monté coulissant dans l'alésage **41** du doigt **35** de serrage, offrant ainsi à l'équipage **24** mobile une mobilité longitudinale par rapport au doigt **35** de serrage entre une position dite de repos dans laquelle le la coupelle **42** est écartée du joint **36** interne sans le comprimer, et une position dite de travail dans laquelle la coupelle **42** comprime axialement le joint **36** interne par l'intermédiaire de la bague **46**.

Le mouvement de l'équipage **24** mobile peut être assuré au moyen d'un vérin, d'une crémaillère ou tout autre mécanisme permettant de le mouvoir.

La compression axiale du joint **36** interne provoque alors une saillie radiale du joint **36** interne par rapport à la paroi **37** latérale de la broche, le joint **36** interne venant alors au contact de la face **10** interne de la jupe **5** de la pièce **2** support, comblant ainsi un jeu entre la paroi **37** latérale de la broche **34** et la jupe **5** de la pièce **2** support, délimitant vers le haut la cavité **29** de surmoulage. Les positions de repos et de travail de l'équipage **24** mobile sont représentées respectivement sur la figure **5** et la figure **6**.

La cavité **29** de surmoulage de la pièce **3** de finition sur la pièce **2** support est ainsi délimitée par le joint **28** externe, la paroi **31** externe et le fond **32** des chariots **25a**, **25b** du moule **22**, la paroi **37** latérale de la broche **34**, le joint **36** interne et la jupe **4** de la pièce **3** support.

Lorsque les chariots **25a**, **25b** du moule **22** sont jointifs le fond **32** de ceux-ci vient affleurer la paroi **37** latérale de la broche **34**.

Il est toutefois à noter que la broche **34**, la coupelle **42**, le joint **36** interne, le joint **44** support, le joint **28** externe et les chariots **25a**, **25b**, ont des portions utiles ayant une forme similaire à la forme de la jupe **5**, de sorte que les joints **28**, **36** puissent coopérer hermétiquement avec celle-ci sans que les chariots **25a**, **25b**, la broche **34** ou encore la coupelle **42** ne viennent buter sur la pièce **2** support, ce qui nuirait au surmoulage.

Le procédé de surmoulage d'un composant bimatière tel que décrit précédemment comprend les étapes consistant à :
- insérer une pièce **2** support sur la coupelle **42** ;
- fermer le moule en rapprochant les chariots **25a**, **25b** ;
- maintenir les chariots **25a**, **25b** et la pièce **2** support en position via le dessus **26** de moule;
- comprimer le joint interne par l'intermédiaire de la coupelle pour fermer la cavité de surmoulage ;
- injecter la matière plastique constitutive de la pièce **3** de finition dans la cavité **29** de surmoulage ;
- ouvrir le moule **22** ;
- éjecter le composant **1** bimatière.

L'insertion de la pièce **2** support sur la coupelle **42** peut se faire de manière automatisée ou de manière manuelle par un opérateur. L'opérateur ou la machine se saisit d'une pièce **2** support qoriente la jupe **5** vers la broche **34**, puis vient mettre en prise la face **10** interne de la jupe **5** sur le joint **44** support porté par la coupelle **42**.

Une fois la pièce **2** support en position sur la coupelle **42**, les étapes suivantes du procédé sont conduites automatiquement.

L'étape suivante consiste en la fermeture des chariots **25a**, **25b** autour de la pièce **2** support. Les demi-joints **28** externes portés chacun par un chariot **25a**, **25b** forment alors un joint **28** externe complet qui vient au contact de la face **8** externe de la jupe **5** de la pièce **2** support.

Le dessus **26** de moule est alors descendu au contact des chariots **25a**, **25b** de sorte à bloquer en contact les chariots **25a**, **25b** l'un avec l'autre et à maintenir en position la pièce **2** support.

L'équipage **24** mobile est déplacé vers sa position de travail, le joint **36** interne est alors comprimé axialement par la coupelle **42**, et ferme la cavité **29** de surmoulage en venant au contact de la face **10** interne de la jupe **5**.

Une fois la cavité **29** de surmoulage formée, la matière pastique est injectée, formant ainsi la pièce **3** de finition sur la pièce **2** support.

Enfin, le moule **22** est ouvert et le composant **1** bimatière est éjecté (automatiquement ou manuellement par un opérateur).

Une unité **21** de surmoulage telle que décrite précédemment offre l'avantage de pouvoir surmouler la pièce **3** de finition en matière plastique sur la pièce **2** support en garantissant des dimensions fonctionnelles internes, notamment pour la fabrication de bouchons dans pour lesquels une dimension intérieure stricte est nécessaire afin d'assurer l'étanchéité du bouchon sur le flacon qu'il bouche ou encore d'améliorer la tenue mécanique du bouchon sur le flacon au moyen des contre dépouilles **19**.

En effet, la cavité **29** est délimitée intérieurement par la paroi **37** latérale portée par la broche **34**, elle-même réalisée dans un matériau dur tel que l'acier. Ainsi, la précision des dimensions intérieures de la pièce **3** de finition est obtenue par les dimensions externes de la broche **34** qui ne se déforme pas lors du surmoulage.

Un autre avantage est conféré par la compression axiale du joint **36** interne qui permet de prendre en compte les tolérances de fabrication des pièces **2** support et notamment les tolérances internes de la jupe **5** de la pièce **2** support.

De plus, l'unité **21** de surmoulage telle que décrite permet de résister aux pressions d'injection de la matière plastique dans la cavité **29** de surmoulage.

Un autre avantage est dû au joint **36** interne qui permet, lorsque le surmoulage est effectué de dégager le composant **1** bimatière sans que le joint **36** interne ne retienne voire n'arrache la pièce **5** de finition surmoulée sur la pièce **2** support.

Enfin, l'unité **21** de surmoulage telle que décrite permet de réaliser un surmoulage sur des pièces **2** support fragiles, par exemple en verre, grâce à l'élasticité du joint **36** interne épousant au mieux la forme de la jupe **5** de la pièce **2** support sans exercer une pression trop forte.

## Revendications

1. Unité (**21**) de surmoulage d'un composant (**1**) bimatière comprenant une pièce (**2**) support pourvue d'une jupe (**5**) cylindrique et une pièce (**3**) de finition en matière plastique surmoulée sur la pièce (**2**) support, l'unité (**21**) de surmoulage comprenant :
- une broche (**34**) centrale comprenant une paroi (**37**) latérale et une surface (**38**) supérieure sur laquelle repose un joint (**36**) interne apte à venir en contact d'une face (**10**) interne de la jupe (**5**) de la pièce (**2**) support, la paroi (**37**) latérale et la surface (**38**) supérieure étant jointes à une extrémité supérieure de la broche (**34**) ;
- un moule (**22**), définissant une paroi (**31**) externe entourant la broche (**34**) ;
- un joint (**28**) externe en saillie de la paroi (**31**) externe du moule (**22**) apte à venir en contact sur une face (**8**) externe de la jupe (**5**) de la pièce (**2**) support,
- la paroi (**37**) latérale nue de la broche (**34**) définit une paroi interne d'une cavité (**29**) de surmoulage dans laquelle la matière plastique est injectée, et en ce que
- le joint (**36**) interne s'étend axialement depuis la surface (**38**) supérieure dans une direction opposée de la broche (**34**),
**caractérisée en ce que**
- le joint (**36**) interne est configuré pour être comprimé axialement afin de venir au contact de la face (**10**) interne de la jupe (**5**) de la pièce (**2**) support.

2. Unité (**21**) selon la revendication 1 **caractérisée en ce que** le joint (**36**) interne est comprimé pour venir au contact de la face (**10**) interne de la jupe (**5**) par une coupelle (**42**) et un arbre (**43**) solidaire de la coupelle (**42**), l'arbre (**43**) traversant la broche (**34**) longitudinalement, et la coupelle (**42**) ayant une bague (**46**) propre à comprimer axialement le joint (**36**) interne sous l'effet d'une force appliquée sur l'arbre (**43**).

3. Unité (**21**) selon l'une quelconque des revendications précédentes **caractérisée en ce que** le moule (**22**) comprend en outre un dessus (**26**) de moule apte à maintenir des chariots (**25a**, **25b**) composant le moule (**22**) et la pièce (**2**) support en position lors du surmoulage de la pièce (**3**) de finition sur la pièce (**2**) support.

4. Unité (**21**) selon l'une quelconque des revendications précédentes **caractérisée en ce que** le joint (**28**) externe se compose de deux demi-joints (**28**) portés chacun par un chariot (**25a**, **25b**) du moule et maintenus dans un lamage (**30**) réalisé sur les chariots (**25a**, **25b**) au moyen d'une plaque (**27**) de maintien.

5. Procédé de fabrication d'un composant (**1**) bimatière comprenant une pièce (**2**) support pourvue d'une jupe (**5**) cylindrique et une pièce (**3**) de finition en matière plastique surmoulée sur la pièce (**2**) support, au moyen d'une unité de moulage selon l'une des revendications 2 à 4, le procédé comprenant les étapes consistant à :
- insérer une pièce (**2**) support dans l'unité (**21**) de surmoulage ;
- fermer le moule (**22**) ;
- maintenir la pièce (**2**) support en position ;
- injecter une matière plastique constitutive de la pièce (**3**) de finition dans une cavité (**29**) de surmoulage ;
- ouvrir le moule (**22**) ;
- éjecter le composant (**1**) bimatière
**caractérisé en ce que** le procédé comprend en outre une étape de délimitation de la cavité (**29**) de surmoulage dans laquelle un joint (**36**) interne est compressé axialement pour venir au contact de la jupe (**5**) de la pièce (**2**) support.

6. Procédé selon la revendication 5 **caractérisé en ce que** la pression d'injection de la matière plastique est comprise entre 10 et 30 bars.

## Patentansprüche

1. Abformeinheit (21) eines Bauteils (1) aus zwei Materialien, umfassend ein Trägerstück (2), das mit einem zylindrischen Rand (5) und einem auf dem Trägerstück (2) abgeformten Endstück (3) aus Plastik versehen ist, wobei die Abformeinheit (21) umfasst:
- eine zentrale Spindel (34), umfassend eine laterale Wand (37) und eine obere Oberfläche (38), auf der eine Innendichtung (36) ruht, die geeignet ist, mit einer Innenseite (10) des Randes (5) des Trägerstücks (2) in Kontakt zu kommen, wobei die laterale Wand (37) und die obere Oberfläche (38) an einem oberen Ende der Spindel (34) miteinander verbunden sind;
- eine Form (22), die eine die Spindel (34) umgebende Außenwand (31) definiert;
- ein aus der Außenwand (31) der Form (22) hervorstehende Außendichtung (28), die geeignet ist, auf einer Außenseite (8) des Randes (5) des Trägerteils (2) in Kontakt zu kommen,
- die nackte laterale Wand (37) der Spindel (34) definiert eine Innenwand einer Abformungsaushöhlung (29), in der das Plastikmaterial eingespritzt ist, und dass
- die Innendichtung (36) sich axial von der oberen Oberfläche (38) in einer zur Spindel (34) umgekehrten Richtung erstreckt,
**dadurch gekennzeichnet, dass**
- die Innendichtung (36) konfiguriert ist, um axial komprimiert zu sein, um mit der Innenseite (10) des Randes (5) des Trägerteils (2) in Kontakt zu kommen.

2. Einheit (21) gemäß Anspruch 1, **dadurch gekennzeichnet, dass** die Innendichtung (36) komprimiert ist, um mit der Innenseite (10) des Randes (5) durch eine Manschette (42) und eine fest mit der Manschette (42) verbundene Welle (43) in Kontakt zu kommen, wobei die Welle (43) die Spindel (34) in Längsrichtung durchquert, und die Manschette (42) einen Ring (46) aufweist, der geeignet ist, die Innendichtung (36) axial unter der Wirkung einer auf die Welle (43) angewendeten Kraft zu komprimieren.

3. Einheit (21) gemäß irgendeinem der voranstehenden Ansprüche, **dadurch gekennzeichnet, dass** die Form (22) darüber hinaus ein Oberteil (26) der Form umfasst, das geeignet ist, die Form (22) bildende Schlitten (25a, 25b) und das Trägerstück (2) beim Abformen des Endstücks (3) auf dem Trägerstück (2) in Position zu halten.

4. Einheit (21) gemäß irgendeinem der voranstehenden Ansprüche, **dadurch gekennzeichnet, dass** die Außendichtung (28) sich aus zwei Halbdichtungen (28) zusammensetzt, die jeweils durch einen Schlitten (25a, 25b) der Form getragen und in einer Senkung (30) gehalten sind, die auf den Schlitten (25a, 26b) mittels einer Halteplatte (27) realisiert ist:

5. Herstellungsverfahren eines Bauteils (1) aus zwei Materialien, umfassend ein Trägerteil (2), das mit einem zylindrischen Rand (5) und einem auf dem Trägerstück (2) aufgeformten Endstück (3) aus Plastik versehen ist, mittels einer Abformeinheit gemäß einem der Ansprüche 2 bis 4, wobei das Verfahren die folgenden Schritte umfasst:
- Einfügen eines Trägerteils (2) in die Abformeinheit (21);
- Schließen der Form (22);
- Halten des Trägerteils (2) in Position;
- Einspritzen eines das Endstück (3) bildenden Plastiks in eine Abformaushöhlung (29);
- Öffnen der Form (22);
- Ausstoßen des Bauteils (1) aus zwei Materialien,
**dadurch gekennzeichnet, dass** das Verfahren darüber hinaus einen Begrenzungsschritt der Abformaushöhlung (29) umfasst, bei dem eine Innendichtung (36) axial komprimiert ist, um mit dem Rand (5) des Trägerstücks (2) in Kontakt zu kommen.

6. Verfahren gemäß Anspruch 5, **dadurch gekennzeichnet, dass** der Einspritzdruck des Plastiks zwischen 10 und 30 bar inbegriffen ist.

## Claims

1. Unit (21) for over-moulding a two-material component (1) comprising a support part (2) provided with a cylindrical skirt (5) and a finishing part (3) made of plastic material over-moulded on the support part (2), the unit (21) for over-moulding comprising:
- a central pin (34) comprising a lateral wall (37) and an upper surface (38) whereon rests an inner seal (36) able to come into contact with an inner face (10) of the skirt (5) of the support part (2), the lateral wall (37) and the upper surface (38) being connected to an upper end of the pin (34);
- a mould (22), defining an outer wall (31) surrounding the pin (34);
- an inner seal (28) protruding from the outer wall (31) of the mould (22) able to come into contact on an outer face (8) of the skirt (5) of the support part (2),
- the bare lateral wall (37) of the pin (34) defines an inner wall of a cavity (29) for over-moulding into which the plastic material is injected, and in that
- the inner seal (36) axially extends from the upper surface (38) in a direction opposite the pin (34),
**characterised in that**
- the inner seal (36) is configured to be axially compressed in order to come into contact with the inner face (10) of the skirt (5) of the support part (2).

2. Unit (21) according to claim 1 **characterised in that** the inner seal (36) is compressed in order to come into contact with the inner face (10) of the skirt (5) by a cup (42) and a shaft (43) integral with the cup (42), the shaft (43) longitudinally passing through the pin (34), and the cup (42) having a ring (46) able to axially compress the inner seal (36) under the effect of a force applied on the shaft (43).

3. Unit (21) according to any preceding claim **characterised in that** the mould (22) further comprises a mould top (26) able to maintain carriages (25a, 25b) comprising the mould (22) and the support part (2) in position during the over-moulding of the finishing part (3) on the support part (2).

4. Unit (21) according to any preceding claim **characterised in that** the outer seal (28) is composed of two half-seals (28) each carried by a carriage (25a, 25b) of the mould and maintained in a counterbore (30) made on the carriages (25a, 25b) by means of a retaining plate (27).

5. Method for manufacturing a two-material component (1) comprising a support part (2) provided with a cylindrical skirt (5) and a finishing part (3) made of plastic material over-moulded on the support part (2), by means of a unit for over-moulding according to one of claims 2 to 4, the method comprising the steps of:
- inserting a support part (2) in the unit (21) of for over-moulding;
- closing the mould (22);
- maintaining the support part (2) in position
- injecting a plastic material forming the finishing part (3) in a cavity (29) for over-moulding;
- opening the mould (22);
- ejecting the two-material component (1)
**characterised in that** the method further comprises a step of delimiting the cavity (29) for over-moulding wherein an inner seal (36) is axially compressed in order to come into contact with the skirt (5) of the support part (2).

6. Method according to claim 5 **characterised in that** the injection pressure of the plastic material is between 10 and 30 bars.
